# EUROPÄISCHE PATENTSCHRIFT

(11) **EP 3 562 769 B1**
(45) Veröffentlichungstag und Bekanntmachung des Hinweises auf die Patenterteilung: **21.06.2023**
(21) Anmeldenummer: 18714247.6
(22) Anmeldetag: 29.03.2018
(51) Int. Cl.: B65G 47/91, B25B 11/00

(54) **SAUGVORRICHTUNG**
SUCTION DEVICE
DISPOSITIF D'ASPIRATION

(30) Priorität: 31.03.2017 DE 102017106936
(43) Veröffentlichungstag der Anmeldung: 06.11.2019
(73) Patentinhaber: J. Schmalz GmbH, 72293 Glatten (DE); TRUMPF Werkzeugmaschinen SE + Co. KG, 71254 Ditzingen (DE)
(72) Erfinder: HOEHN, Rainer, 72280 Dornstetten (DE); HORST, Jonas, 72280 Dornstetten (DE); DEISS, Magnus, 70372 Stuttgart (DE)
(74) Vertreter: DREISS Patentanwälte PartG mbB
(86) Internationale Anmeldenummer: PCT/EP2018/058046
(87) Internationale Veröffentlichungsnummer: WO 2018/178221

(56) Entgegenhaltungen:
- EP-A1- 1 918 076
- EP-A2- 0 456 884
- DE-A1- 19 814 262
- DE-B3-102013 222 376
- FR-A1- 2 841 627
- JP-A- 2003 004 154

## Beschreibung

Die Erfindung betrifft eine Saugvorrichtung gemäß dem Oberbegriff des Anspruchs 1. Derartige Saugvorrichtungen dienen zum Fixieren von Gegenständen durch Ansaugen mittels Unterdruck.

Diese Saugvorrichtungen weisen Ventilvorrichtungen auf, welche die besondere Funktion bereitstellen, dass sie bei freiem Ansaugen selbsttätig schließen. Unter einem freiem Ansaugen wird in vorliegendem Zusammenhang verstanden, dass die zugehörige Saugvorrichtung nicht mit einem anzusaugenden Gegenstand belegt ist und frei ansaugen kann.

Durch das selbsttätige Schließen der genannten Ventilvorrichtungen kann bei unbelegter Saugstelle eine Energieverschwendung durch freies Ansaugen vermieden werden. Die genannten Ventilvorrichtungen werden insbesondere bei größeren Anlagen mit mehreren Saugvorrichtungen verwendet, um dort bei der Handhabung von Gegenständen, die nicht sämtliche Saugstellen abdecken, Energie einzusparen und eine Beeinträchtigung der Unterdruckversorgung zu vermeiden.

Im Stand der Technik sind verschiedene Möglichkeiten zur Realisierung von selbsttätig schließenden Ventilen bekannt, wobei verschiedene physikalische Funktionsprinzipien ausgenutzt werden können.

Beispielsweise zeigt die DE 34 29 444 A1 ein Strömungsventil, bei welchem ein kugelartiger Ventilkörper in einem Strömungskanal angeordnet ist. Der Ventilkörper wird durch den Strömungsimpuls der Strömung durch den Strömungskanal mitgerissen und gegen einen Dichtsitz verlagert, wenn die Strömung einen Schwellwert überschreitet. Derartige Ventile sind aufgrund ihrer Auslösung durch den Strömungsimpuls vergleichsweise störungsanfällig bei Strömungsstößen. Insbesondere bei Beginn eines Ansaugvorganges kann es aufgrund der damit verbundenen starken Strömungsimpulse zu einem unerwünschten Verschluss des Ventils kommen.

Bekannt sind außerdem selbsttätig schließende Ventile, welche ausnutzen, dass sich bei Strömung über einen Strömungswiderstand eine von der Stärke der Strömung abhängige Druckdifferenz einstellt.

Beispielsweise zeigt die DE 198 14 262 A1 ein Ventil mit zwei Druckräumen, welche durch eine flexible Wandung voneinander getrennt sind. Beide Räume sind jeweils über Strömungsverbindungen mit einer Unterdruckversorgung verbunden. Einer der beiden Räume steht ständig in Verbindung mit der Unterdruckversorgung und wird im Betrieb des Ventils nicht von einer Saugströmung durchströmt. In dem anderen Raum stellt sich ein Unterdruck ein, dessen Größe davon abhängt, in welchem Maße eine freie Strömung von dem Ansaugdurchgang des Ventils durch das Ventil hindurch zur Unterdruckversorgung möglich ist. Eine Druckdifferenz zwischen den beiden Räumen führt bei diesem Ventil zu einer Deformation der flexiblen Wandung und zu einer Verlagerung eines Dichtabschnitts an einen Dichtsitz und zum Verschluss des Ventils. Bei diesem Ventil sind daher in dem Ventilgehäuse zwei Druckräume untergebracht, die parallel mit der Unterdruckversorgung verbunden sind. Diese Art von selbsttätig schließenden Ventilen kann daher mit gewissem konstruktivem Aufwand und erhöhtem Raumbedarf verbunden sein.

Eine Saugvorrichtung mit selbsttätig schließendem Ventil ist in der WO 2015/062778 A1 beschrieben. Hierbei trennt eine flexible Wandung einen Steuerraum von einem Saugseitenraum, wobei ein außerhalb des Steuerraums liegender Dichtabschnitt mit der flexiblen Trennwandung bewegungsgekoppelt ist. Das Verschließen diesen Ventils erfolgt daher nicht aufgrund eines Strömungsimpulses, welcher einen Verschlusskörper in eine Verschließstellung mitreißt, sondern aufgrund einer sich zwischen zwei Druckräumen aufgrund von Strömungswiderständen einstellenden Druckdifferenz.

Eine Vorrichtung mit den Merkmalen des Oberbegriffs des Anspruchs 1 ist aus EP 0 456 884 A2 bekannt.

Bei den genannten Ventilvorrichtungen ist es insbesondere von Bedeutung, dass ein reproduzierbares Schaltverhalten erreicht wird. Außerdem soll die Ventilvorrichtung oftmals in der jeweiligen Saugvorrichtung integriert verbaut werden. Daher ist eine kompakte Bauform und ein einfacher konstruktiver Aufbau wünschenswert.

Der Erfindung liegt die Aufgabe zugrunde, für eine Saugvorrichtung eine langlebige, selbsttätig schließende Ventilvorrichtung mit reproduzierbarem und zuverlässigem Schaltverhalten auf konstruktiv einfache und kompakte Weise bereitzustellen.

Diese Aufgabe wird durch eine Saugvorrichtung mit zugehöriger Ventilvorrichtung gemäß Anspruch 1 gelöst. Die Saugvorrichtung ist dazu ausgelegt Gegenstände durch Ansaugen mittels Unterdruck zu fixieren (z.B. Unterdruck-Greifvorrichtung oder Unterdruck-Spannvorrichtung).

Die Ventilvorrichtung weist ein Ventilgehäuse auf, welches einen Ventilinnenraum definiert. Das Ventilgehäuse weist einerseits eine Saugseite auf, welche mit einer Saugstelle der Saugvorrichtung (z.B. Saugöffnung oder Saugköper) zum Ansaugen des Gegenstandes in Verbindung steht. Das Ventilgehäuse weist andererseits einen Versorgungsanschluss zur Verbindung mit einer Unterdruckversorgung (z.B. Vakuumpumpe, Ejektor) auf. Der Versorgungsanschluss mündet in den Ventilinnenraum ein.

Es ist eine flexible Trennwandung oder Membran vorgesehen, welche sich innerhalb der Saugvorrichtung derart erstreckt, dass einerseits der flexiblen Trennwandung ein Steuerraum definiert ist und andererseits der flexiblen Trennwandung die Saugseite liegt. Der Steuerraum erstreckt sich zumindest teilweise in dem Ventilgehäuse. Der Steuerraum ist mit dem Versorgungsanschluss verbunden. Der Steuerraum ist außerdem über einen Drosseldurchgang mit der Saugseite verbunden.

Die Verbindung von Saugseite und Steuerraum ist derart ausgestaltet, dass (bei freiem Ansaugen bei frei einströmbarem Zustand der Saugstelle bzw. der Saugseite) ein Strömungsweg von der Saugseite durch den Drosseldurchgang in den Steuerraum hinein und weiter von dem Steuerraum durch den Versorgungsanschluss bereitgestellt wird. Insbesondere verläuft der Strömungsweg also durch den Steuerraum hindurch.

Der Drosseldurchgang ist dabei derart ausgebildet, dass für Strömungen durch den Drosseldurchgang von der Saugseite in den Steuerraum ein Strömungswiderstand derart definiert ist, dass sich bei freiem Ansaugen aufgrund des Strömungswiderstandes ein Unterdruck in dem Steuerraum im Vergleich zur Saugseite einstellt.

Die flexible Trennwandung ist derart ausgebildet, dass sie sich aufgrund des Unterdrucks, der sich bei freiem Ansaugen in dem Steuerraum einstellt, verformt, und zwar derart, dass sich das Volumen des Steuerraumes unter Einfluss des Unterdrucks verkleinert.

Insofern wird der Unterdruck, der sich aufgrund des Strömungswiderstandes im Drosseldurchgang bei einer ausreichend großen Strömung entlang des Strömungsweges in dem Steuerraum gegenüber der Saugseite einstellt, dazu genutzt, die flexible Trennwandung zu verformen. Die Verformung der flexiblen Trennwandung wird bei der vorliegenden Saugvorrichtung dann dazu ausgenutzt, die Ventilvorrichtung zu schließen. Dadurch wird die gewünschte Funktion eines selbsttätig schließenden Ventils erzielt.

Hierzu sind ein in das Innere des Steuerraums hineinragender Dichtvorsprung und ein zugehöriger Dichtsitz vorgesehen. Der Dichtsitz ist ebenfalls innerhalb des Steuerraumes angeordnet. Der Dichtvorsprung und der Dichtsitz sind relativ zueinander verlagerbar in dem Ventilinnenraum angeordnet, und zwar derart, dass bei Verformung der flexiblen Trennwandung (aufgrund des freien Ansaugens bzw. aufgrund des sich hierbei in dem Steuerraum einstellenden Unterdrucks) der Dichtvorsprung an den Dichtsitz zum Anliegen kommt.

Dabei sind Dichtvorsprung und Dichtsitz derart ausgebildet und angeordnet, dass bei Anliegen des Dichtvorsprungs am Dichtsitz der Strömungsweg durch den Drosseldurchgang in den Steuerraum hinein unterbrochen ist, wobei die Unterbrechung innerhalb des Steuerraums erfolgt.

Unter freiem Ansaugen wird im vorliegenden Zusammenhang verstanden, dass ein Ansaugen bei frei einströmbarem Zustand der Saugseite erfolgt, z.B. ein freies Ansaugen bei unbelegter Saugstelle der Saugvorrichtung. Es stellt sich dann eine Strömung entlang des Strömungsweges ein. Diese Strömung wird getrieben durch die Unterdruckversorgung, welche durch den Versorgungsanschluss mit dem Steuerraum verbunden ist. Da bei freiem Ansaugen zunächst eine hohe Strömung bzw. Stromdichte entlang des Strömungsweges vorliegt, stellt sich aufgrund des Strömungswiderstandes im Drosseldurchgang ein Unterdruck im Steuerraum gegenüber der Saugseite ein. Der Unterdruck führt zu einer Kompression des Steuerraums unter Verformung der flexiblen Trennwandung. Dadurch wird der Dichtvorsprung an den Dichtsitz zum Anliegen gebracht und die Ventilvorrichtung geschlossen. Da der Steuerraum weiterhin von der Unterdruckversorgung mit Unterdruck beaufschlagt wird, wird der im Steuerraum gegenüber der Saugseite vorliegende Unterdruck aufrechterhalten und die Ventilvorrichtung bleibt geschlossen.

Bei Ansaugen mit belegtem Zustand der Saugseite, z.B. bei Vorliegen eines Gegenstandes an einer Saugöffnung der zugehörigen Saugvorrichtung, stellt sich hingegen keine ausgeprägte Strömung entlang des Strömungsweges ein. Dadurch kann sich auch kein ausgeprägter Unterdruck über den Strömungswiderstand in dem Steuerraum gegenüber der Saugseite ausbilden. Der Dichtvorsprung liegt dann nicht an dem Dichtsitz an und gibt den Strömungsweg frei.

Aufgrund des Strömungswiderstandes des Drosseldurchgangs hängt die Druckdifferenz zwischen Steuerraum und Saugseite von der Stärke der Strömung entlang des Strömungsweges ab.

Durch die Konfiguration der flexiblen Trennwandung, die Ausgestaltung des Steuerraumes sowie des Dichtvorsprungs und des Dichtsitzes kann ein Schwellwert für die Strömungsstärke oder Stromdichte definiert werden, bei dessen Überschreitung die Druckdifferenz zwischen Steuerraum und Saugseite derart groß ist, dass der Dichtvorsprung an dem Dichtsitz anliegt.

Bei dem anspruchsgemäßen Ventil liegen Saugseite und Steuerraum entlang des Strömungsweges hintereinander. Der Dichtvorsprung und der zugehörige Dichtsitz sind beide in dem Steuerraum angeordnet. Dadurch ergibt sich ein vergleichsweise kompakter Aufbau, insbesondere da es nicht erforderlich ist, mehrere Druckräume parallel mit der Unterdruckversorgungsseite zu verbinden. Das Ventil ist konstruktiv einfach herstellbar, da sich Dichtvorsprung, Dichtsitz und flexible Trennwandung je nach Ausgestaltung als gemeinsames Bauteil herstellen lassen (siehe unten). Die Schalteigenschaften des Ventils können in vorteilhafter Weise durch die Ausgestaltung, z. B. der flexiblen Trennwandung des Steuerraums, des Dichtvorsprungs und des Dichtsitzes, konstruktiv eingestellt werden.

Der Dichtvorsprung und der Dichtsitz können relativ zueinander eine Schließkonfiguration (in welcher die Ventilvorrichtung geschlossen ist) und eine Freigabekonfiguration (geöffnete Ventilvorrichtung) einnehmen. Insbesondere sind die beiden Teile derart angeordnet, dass Dichtvorsprung und Dichtsitz relativ zueinander zwischen Schließkonfiguration und Freigabekonfiguration bewegbar sind. In der Schließkonfiguration liegt der Dichtvorsprung an dem Dichtsitz an. In der Freigabekonfiguration sind Dichtvorsprung und Dichtsitz voneinander beabstandet und geben den Strömungsweg frei.

Die Saugseite des Ventilgehäuses kann als einfache Öffnung des Ventilgehäuses ausgestaltet sein. Beispielsweise ist denkbar, dass das Ventilgehäuse einen einseitig offenen Ventilinnenraum definiert, welcher mit der flexiblen Trennwandung gegenüber der Saugseite abgetrennt ist. Die flexible Trennwandung kann aber auch außerhalb des Ventilinnenraumes verlaufen, z.B. in einem Saugkörper der Saugvorrichtung, wobei der Saugkörper an dem Ventilgehäuse angeordnet ist.

Die Saugseite kann auch mit einem Ansaugeingang ausgestaltet sein, welcher den Ventilinnenraum mit einer Saugstelle der Saugvorrichtung (z.B. mit einem Saugkörper oder einer Saugöffnung) verbindet. Die flexible Trennwandung bzw. Membran erstreckt sich insbesondere innerhalb des Ventilinnenraums. Vorzugsweise verläuft die flexible Trennwandung dann derart, dass einerseits der flexiblen Trennwandung der Steuerraum definiert ist und andererseits der flexiblen Trennwandung ein Saugseitenraum definiert ist. Insofern kann die flexible Trennwandung vorzugsweise innerhalb des Ventilinnenraums verlaufen und trennt einen Steuerraum von einem Saugseitenraum. Der genannten Ansaugeingang mündet vorzugsweise in den Saugseitenraum ein. Der Saugseitenraum ist über den Drosseldurchgang mit dem Steuerraum verbunden. Der Strömungsweg verläuft dann insbesondere von dem Ansaugeingang durch den Saugseitenraum, weiter durch den Drosseldurchgang in den Steuerraum hinein und von dem Steuerraum weiter durch den Versorgungsanschluss hinaus. Damit der Strömungsweg durch den Drosseldurchgang in dem Steuerraum unterbrochen werden kann, ist vorgesehen, dass der Drosseldurchgang mit einer Mündungsöffnung in den Steuerraum einmündet. Die Mündungsöffnung, der Dichtvorsprung und der Dichtsitz sind derart angeordnet, dass bei Vorliegen der Schließkonfiguration, d.h. bei Anliegen des Dichtvorsprungs an dem Dichtsitz, die Mündungsöffnung geschlossen ist - und zwar innerhalb des Steuerraums. Die Mündungsöffnung ist von dem Dichtvorsprung und/oder von dem Dichtsitz geschlossen. Bei Vorliegen der Freigabekonfiguration ist die Mündungsöffnung freigegeben.

Vorteilhafterweise ist der Dichtvorsprung derart ausgestaltet, dass er eine in den Steuerraum offene Mulde aufweist, welche vorzugsweise trichterartig oder konisch ausgebildet ist. Die Ausgestaltung des Dichtvorsprungs mit Mulde ermöglicht eine Reihe verschiedener Konfigurationen, mit welchen eine zuverlässige Abdichtung in Schließkonfiguration möglich ist und ein reproduzierbares Schaltverhalten erzielt werden kann.

Vorzugsweise mündet der Drosseldurchgang in die oben genannte Mulde des Dichtvorsprungs ein. Dadurch kann sich der Dichtvorsprung zuverlässig an dem Dichtsitz festsaugen. Insbesondere weist die Mulde einen Muldenboden auf, an welchem die oben genannte Mündungsöffnung angeordnet ist.

Der Drosseldurchgang ist als Kanal ausgebildet, der sich durch die flexible Trennwandung erstreckt. Der Kanal mündet an einer dem Steuerraum zugewandten Oberfläche der Trennwandung. Insbesondere im Zusammenspiel mit einer Mulde des Dichtvorsprungs bilden dann Mündungsöffnung und Mulde ein zusammenwirkendes Paar, so dass bei Vorliegen der Schließkonfiguration der Dichtvorsprung zuverlässig am Dichtsitz festgesaugt wird und die Mulde die Mündungsöffnung zuverlässig überdeckt. Die Oberfläche, in welcher der Kanal mündet, kann ein ebener Bereich der flexiblen Trennwandung sein. Vorteilhaft kann aber auch sein, dass der Kanal in einem muldenförmigen Bereich der Oberfläche mündet, wie nachfolgend noch erläutert.

Ein zuverlässiges Schließverhalten kann dadurch erreicht werden, dass der Dichtvorsprung von einem die Mündungsöffnung umgebenden Wulst der Trennwandung gebildet ist. Der Wulst ist insbesondere ein einfach geschlossenes Gebilde, z.B. ein Ringwulst. Diese Kombination aus flexibler Trennwandung und Dichtvorsprung ist auf einfache Weise herstellbar.

Die flexible Trennwandung weist vorzugsweise randständige Befestigungsbereiche auf, mit welchen sie in der Saugvorrichtung befestigt ist. Die Mündungsöffnung ist vorzugsweise zentrisch zwischen den Befestigungsbereichen angeordnet. Dadurch kann durch eine Verformung der flexiblen Trennwandung ein großer Schaltweg zwischen Schließkonfiguration und Freigabekonfiguration bereitgestellt werden. Die Befestigungsbereiche sind z.B. von einem umlaufenden Rand oder Bund der flexiblen Trennwandung gebildet. Je nach gewünschtem Schaltverhalten des Ventils kann es jedoch auch vorteilhaft sein, wenn die Mündungsöffnung außermittig zwischen den Befestigungsbereichen angeordnet ist. Nach einer vorteilhaften Ausgestaltung durchspannt die flexible Trennwandung den Ventilinnenraum und ist mit den Befestigungsbereichen an dem Ventilgehäuse befestigt.

Zur vorteilhaften Ausgestaltung ist der Dichtvorsprung an der flexiblen Trennwandung angeordnet. Dadurch wird der Dichtvorsprung dann, wenn sich in dem Steuerraum ein Unterdruck einstellt, durch Verformung der Trennwandung in Richtung zum Dichtsitz hin bewegt.

Als Material für Dichtvorsprung und Trennwandung können vorzugsweise elastisch verformbare Kunststoffe oder Gummi Verwendung finden.

Der Dichtvorsprung ist vorzugsweise einstückig mit der flexiblen Trennwandung ausgebildet. Insbesondere bestehen Trennwandung und Dichtvorsprung zusammenhängend aus einem homogenen Material. Beispielsweise kann der Verbund aus Dichtvorsprung und flexibler Trennwandung in einem gemeinsamen Herstellungsschritt gegossen oder gespritzt werden.

Ein zuverlässiges Schaltverhalten der Ventilvorrichtung kann insbesondere dadurch erreicht werden, dass die flexible Trennwandung derart ausgebildet und angeordnet ist, dass sie bistabil in eine erste Konfiguration und eine zweite Konfiguration schnappen kann, d.h. dass sie sich bistabil zwischen diesen beiden Konfigurationen hin und her bewegen kann. Dabei ist insbesondere vorgesehen, dass in der ersten Konfiguration der Dichtvorsprung an dem Dichtsitz anliegt (entsprechend der genannten Schließkonfiguration) und in der zweiten Konfiguration der Dichtvorsprung von dem Dichtsitz beabstandet ist (entsprechend der Freigabekonfiguration). Die flexible Trennwandung ist hierzu insbesondere als bistabile Membran ausgebildet. Dabei kann die bistabile Membran vorteilhaft so ausgebildet sein, dass sie in der zweiten Konfiguration eine mechanische Kraft gegen den Dichtsitz ausübt. Dies trägt zu einem verbesserten Schließverhalten der Ventilvorrichtung bei.

Zur weiteren Ausgestaltung kann ein verstellbarer Verdrängungskörper vorgesehen sein, welcher in dem Ventilinnenraum derart hinein und aus diesem hinaus verlagerbar ist, dass durch Verlagerung das Volumen des Steuerraums einstellbar ist. Insbesondere ist der Verdrängungskörper in den Steuerraum hinein und aus dem Steuerraum hinaus verlagerbar. Der Verdrängungskörper ist vorzugsweise an dem Ventilgehäuse verstellbar angeordnet, beispielsweise ins Innere des Steuerraums einschiebbar bzw. vorschiebbar und wieder zurück schiebbar. Eine einfache Ausgestaltung ergibt sich dadurch, dass eine in den Steuerraum eindrehbare Einstellschraube vorgesehen ist, welche durch Eindrehen Volumen verdrängt. Durch Einstellung des effektiven Volumens des Steuerraums kann die Ansprechempfindlichkeit und die Ansprechgeschwindigkeit des Ventils bei freiem Ansaugen beeinflusst werden.

Das relativ zueinander bewegbare Paar aus Dichtvorsprung und Dichtsitz kann beispielsweise dadurch realisiert werden, dass der Dichtsitz als ein in den Steuerraum vorspringender Abschnitt des Ventilgehäuses ausgebildet ist. Insbesondere ist hierbei der Dichtsitz gegenüber dem Ventilgehäuse unbeweglich. Der Dichtvorsprung ist dann vorzugsweise an der flexiblen Trennwandung angeordnet und wird bei Verformung der flexiblen Trennwandung bewegt.

Besonders vorteilhaft ist, wenn der Versorgungsanschluss im Ventilgehäuse benachbart zum Dichtsitz, d.h. nicht durch den vorspringenden Abschnitt hindurch, verläuft und seitlich versetzt zu dem Drosseldurchgang (der durch die flexible Trennwandung verläuft) angeordnet ist. Dadurch wird eine hohe Krafteinwirkung auf die flexible Trennwandung auch im geschlossenen Zustand des Ventils sowie eine gute Flächenpressung am Dichtvorsprung erreicht.

Denkbar ist jedoch auch, dass der Dichtvorsprung an dem Ventilgehäuse angeordnet ist und in den Steuerraum hervorragt. Der zugehörige Dichtsitz kann dann insbesondere an der flexiblen Trennwandung angeordnet sein. Eine einfache Ausgestaltung besteht darin, dass die Oberfläche der flexiblen Trennwandung selbst den Dichtsitz bildet. Auch bei dieser Ausgestaltung ist vorteilhaft, wenn der Dichtvorsprung eine Mulde aufweist, wie oben erläutert. Insbesondere kann dann die Mündungsöffnung des Drosseldurchgangs an die Mulde anliegen, so dass eine zuverlässige Abdichtung entsteht.

Zur weiteren Ausgestaltung kann dann der Dichtvorsprung mittels eines verstellbaren Halteelements an dem Ventilgehäuse derart angeordnet sein, dass durch Verstellen des Halteelements ein Abstand des Dichtvorsprungs zu dem Dichtsitz einstellbar ist. Dadurch kann der Schaltpunkt des Ventils und die Reaktionsempfindlichkeit eingestellt werden. Das Halteelement kann beispielsweise eine Einstellschaube oder ein in den Steuerraum einschiebbarer und herausziehbarer Bolzen sein. Das verstellbare Halteelement kann gleichzeitig einen Verdrängungskörper im oben genannten Sinn bereitstellen. Durch Einschieben des Halteelements wird dann das effektive Volumen des Steuerraums verringert. Das Ventil spricht dann bei freiem Ansaugen schneller und empfindlicher an. Gleichzeitig wird durch das Einschieben des Halteelements der Abstand von Dichtvorsprung und Dichtsitz verringert, was ebenfalls zu einem empfindlicheren Ansprechen des Ventils beiträgt.

Bei sämtlichen der genannten Ausgestaltungen ist vorzugsweise die flexible Trennwandung derart ausgebildet und insbesondere derart gespannt angeordnet, dass der Dichtvorsprung und der Dichtsitz in einer voneinander beabstandeten Lage vorgespannt sind. Insofern ist zur Bewegung des Dichtvorsprungs zu dem Dichtsitz hin eine Kraft erforderlich. Dadurch schließt das Ventil erst dann, wenn sich eine gewisse Strömungsstärke entlang des Strömungsweges einstellt und dadurch ein gewisser Unterdruck im Steuerraum gegenüber dem Saugseitenraum aufgebaut wird. Durch die Stärke der Vorspannung kann die Schaltempfindlichkeit des Ventils eingestellt werden. Dies kann sowohl für Ausgestaltungen vorteilhaft sein, in welchen der Dichtvorsprung an der flexiblen Trennwandung angeordnet ist, als auch für solche Ausgestaltungen, in welchen der Dichtsitz gehäuseseitig angeordnet ist.

Um den Strömungswiderstand zu erzielen, kann der Drosseldurchgang grundsätzlich eine definierte Engstelle aufweisen. Der Strömungswiderstand kann jedoch auch dadurch bereitgestellt werden, dass der Drosseldurchgang einen im Vergleich zum übrigen Strömungsweg geringeren Strömungsquerschnitt aufweist.

Die Erfindung wird im Folgenden anhand der Figuren näher erläutert.

Es zeigen:
Figur 1: eine erfindungsgemäße Saugvorrichtung mit Ventilvorrichtung in skizzierter Darstellung;
Figur 2: vergrößerter Ausschnitt aus Figur 1 mit Details betreffend den Dichtvorsprung;
Figur 3: eine weitere Ausgestaltung einer erfindungsgemäßen Saugvorrichtung mit zugehöriger Ventilvorrichtung in skizzierter Darstellung bei Vorliegen der Freigabekonfiguration;
Figur 4: die Saugvorrichtung gemäß Figur 3 bei Vorliegen der Schließkonfiguration;
Figur 5: eine weitere Ausgestaltung einer erfindungsgemäßen Saugvorrichtung mit zugehöriger Ventilvorrichtung in einem ersten Einstellzustand;
Figur 6: die Saugvorrichtung gemäß Figur 5 in einem zweiten Einstellzustand; und
Figur 7: eine weitere Ausgestaltung einer erfindungsgemäßen Saugvorrichtung.

In den Figuren sowie in der nachfolgenden Beschreibung sind für identische oder einander entsprechende Merkmale jeweils dieselben Bezugszeichen verwendet.

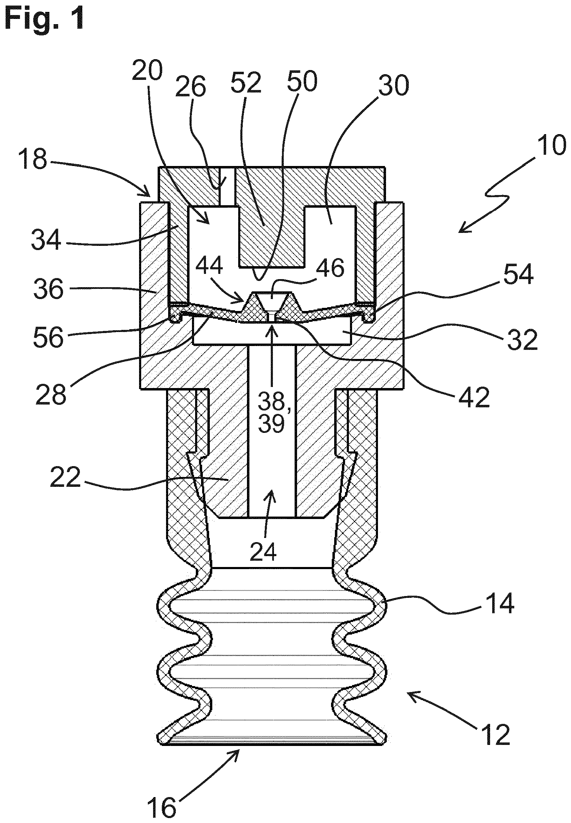

Die Figur 1 zeigt eine Ventilvorrichtung 10, die mit einer Saugvorrichtung 12 baulich verbunden ist. Die Saugvorrichtung 12 umfasst im dargestellten Beispiel einen Saugkörper 14 (z.B. Faltenbalgsauger), der eine Saugstelle 16 definiert, die zum Fixieren eines Gegenstandes (nicht dargestellt) mittels Unterdruck an den Gegenstand herangeführt und angelegt wird. Die Saugstelle 16 kann beispielsweise eine Saugöffnung des Faltenbalgsaugers sein.

Die Ventilvorrichtung 10 weist ein Ventilgehäuse 18 auf, welches einen Ventilinnenraum 20 einschließt. Der Saugkörper 14 ist an dem Ventilgehäuse 18 angeordnet. Das Ventilgehäuse 18 weist einerseits eine Saugseite 21 auf, die mit der Saugstelle 16 verbunden ist. Vorzugsweise weist das Ventilgehäuse 18 einen Anschlussabschnitt 22 auf, mittels welchem die Ventilvorrichtung mit der Saugvorrichtung (hier: Saugkörper 14) verbunden werden kann. Im dargestellten Beispiel handelt es sich bei dem Anschlussabschnitt 22 um einen Stutzen, über den der Saugkörper 14 übergezogen werden kann.

Das Ventilgehäuse 18 weist andererseits einen Versorgungsanschluss 26 auf (vgl. Figur 1). Der Versorgungsanschluss 26 dient dazu, den Ventilinnenraum 20 mit einer Unterdruckversorgung (z.B. Vakuumpumpe, Ejektor) zu verbinden und ist z.B. als Absaugdurchgang durch das Ventilgehäuse 18 ausgebildet.

Der Ventilinnenraum 20 wird von einer flexiblen Trennwandung 28 durchspannt. Die flexible Trennwandung 28 trennt in dem Ventilinnenraum 20 einen oben liegenden Steuerraum 30 ab. Auf der dem Steuerraum abgewandten Seite der flexiblen Trennwandung 38 liegt die Saugseite 21.

Die Saugseite 21 umfasst vorzugsweise einen Saugseitenraum 32, der unmittelbar von der flexiblen Trennwandung 28 begrenzt ist (vgl. Figur 1). Der Saugseitenraum ist über einen Ansaugeingang 24 mit der Saugstelle 16 bzw. dem Saugkörper 14 verbunden. Insofern wird durch den Ansaugeingang 24 in die Ventilvorrichtung 10 angesaugt. Vorzugsweise verläuft der Ansaugeingang 24 durch den Anschlussabschnitt 22 (vgl. Figur 1).

Eine vorteilhafte Montage kann dadurch erreicht werden, dass das Ventilgehäuse 18 zweieilig aufgebaut ist, mit einem Gehäuseoberteil 34 und einem Gehäuseunterteil 36, die miteinander verbindbar sind. In diesem Fall kann die flexible Trennwandung 28 dadurch in dem Ventilinnenraum 20 befestigt werden, dass die flexible Trennwandung 28 zwischen Gehäuseoberteil 34 und Gehäuseunterteil 36 angeordnet ist, beispielsweise zwischen den beiden Gehäuseteilen eingeklemmt ist.

Der Steuerraum 30 ist über den Versorgungsanschluss 26 mit der Unterdruckversorgung verbunden. Darüber hinaus ist der Steuerraum 30 über einen Drosseldurchgang 38 mit der Saugseite 21 oder ggf. dem Saugseitenraum 32 verbunden, der sich auf der anderen Seite der flexiblen Trennwandung 28 erstreckt.

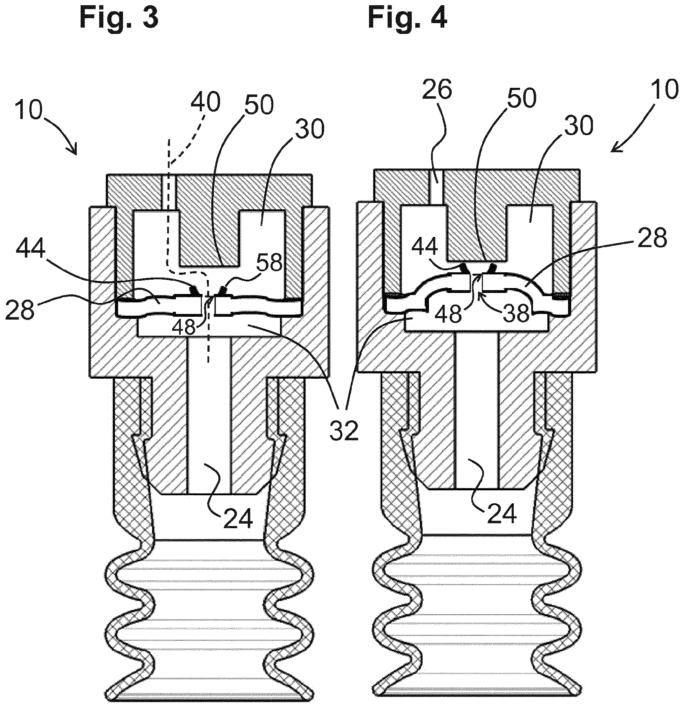

Somit ergibt sich durch die Ventilvorrichtung 10 ein Strömungsweg 40, der exemplarisch in der Figur 3 eingezeichnet ist. Der Strömungsweg 40 verläuft von der Saugseite 21 (von dem Ansaugeingang 24 durch den Saugseitenraum 32 hindurch) weiter durch den Drosseldurchgang 38 hindurch in den Steuerraum 30 hinein und zumindest abschnittsweise durch den Steuerraum 30 hindurch, sowie letztendlich durch den Versorgungsanschluss 26 aus dem Steuerraum 30 hinaus.

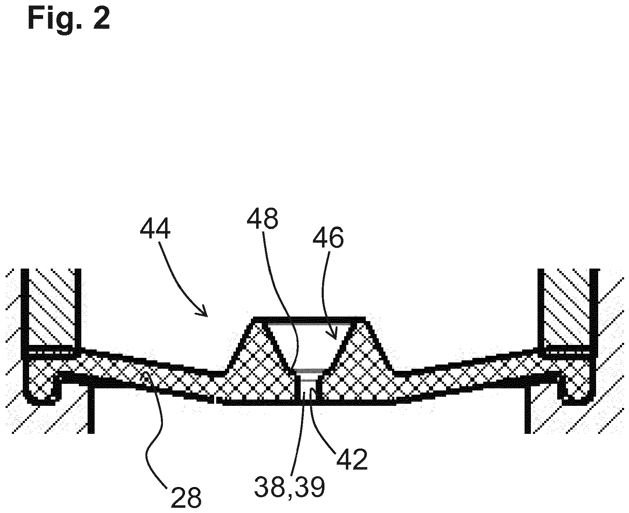

Der Drosseldurchgang 38 definiert eine Engstelle 42 entlang des Strömungsweges 40 (Figuren 1 und 2). Im Ergebnis weist der Drosseldurchgang 38 einen Strömungswiderstand für Strömungen von dem Saugseitenraum 32 in den Steuerraum 30 auf.

Die flexible Trennwandung 28 weist einen Dichtvorsprung 44 auf, welcher in den Steuerraum 30 hineinragt. Der Dichtvorsprung 44 weist vorzugsweise eine Mulde 46 auf, die im dargestellten Beispiel konisch oder trichterartig ausgebildet ist. Eine Mündungsöffnung 48 des Drosseldurchgangs 38 mündet in einem Muldenboden der Mulde 46. Der Drosseldurchgang 38 ist als Kanal 39 ausgebildet, der durch die flexible Trennwandung 28 hindurch verläuft.

Dies ist im Detail in Figur 2 dargestellt. Diese zeigt eine vergrößerte Darstellung des Dichtvorsprungs 44, um dessen Ausgestaltungen mit Mulde 46, Mündungsöffnung 48 sowie den Kanal 39 mit Engstelle 42 durch die flexible Trennwandung 28 zu verdeutlichen.

In dem Steuerraum 30 ist außerdem ein Dichtsitz 50 bereitgestellt, an welchen der Dichtvorsprung 44 bei Verformung der flexiblen Trennwandung 28 zum Anliegen gebracht werden kann. Im dargestellten Beispiel wird der Dichtsitz 50 von einem in den Steuerraum 30 hervorspringenden Abschnitt 52 des Ventilgehäuses 18 gebildet.

Bei freiem Ansaugen, d.h. bei unbelegter Saugstelle 16, stellt sich aufgrund des am Versorgungsanschluss anliegenden Unterdruckes eine vergleichsweise starke Strömung von der Saugstelle 16 zur Saugseite 21, durch den Saugseitenraum 32 sowie durch den Drosseldurchgang 38 hindurch in den Steuerraum 30 ein. Die Strömung entlang des Strömungsweges 40 führt dann weiter durch den Versorgungsanschluss 26 zur Unterdruckversorgung. Aufgrund des Strömungswiderstandes im Drosseldurchgang 38 bildet sich in dem Steuerraum 30 gegenüber der Saugseite 21 bzw. dem Saugseitenraum 32 ein Unterdruck aus. Dies führt dazu, dass die flexible Trennwandung 28 derart verformt wird, dass das Volumen des Steuerraums 30 verkleinert wird. Dadurch bewegt sich der Dichtvorsprung 44 zu dem Dichtsitz 40 hin und kommt an diesem zum Anliegen. Dies hat zur Folge, dass der Strömungsweg 40 geschlossen ist. Da der Steuerraum 30 weiterhin über den Versorgungsanschluss 26 mit der Unterdruckversorgung verbunden ist, bleibt der Dichtvorsprung 44 dann in der Position, in welcher er an dem Dichtsitz 50 anliegt (Schließkonfiguration des Ventils). Demgegenüber ist bei Vorliegen der in der Figur 1 gezeigten Freigabekonfiguration der Dichtvorsprung 44 von dem Dichtsitz 50 beabstandet.

Wie in Figur 1 angedeutet, ist die flexible Trennwandung vorzugsweise einstückig mit dem Dichtvorsprung 44 ausgebildet, beispielsweise aus einem homogenen, flexiblen Material (Kunststoff oder Gummi).

Vorzugsweise weist die flexible Trennwandung 28 einen im Randbereich umlaufenden Bund 54 auf. Der Bund 54 ist eine beispielhafte Ausgestaltung für einen Befestigungsbereich 56 der flexiblen Trennwandung 28 zu deren Befestigung in dem Ventilinnenraum 20.

Wie in den Figuren 3 und 4 dargestellt, kann die flexible Trennwandung 28 auf verschiedene Weise ausgestaltet sein. Im Falle der Figuren 3 und 4 ist der Dichtvorsprung 44 auf einfache Weise von einem Wulst 58 gebildet, welcher die Mündungsöffnung 48 umläuft.

Die flexible Trennwandung 28 kann beispielsweise als bistabile Membran ausgebildet sein, welche in zwei Konfigurationen bistabil schnappen kann. Beispielhaft zeigt die Figur 3 eine erste Konfiguration der flexiblen Trennwandung 28, in welcher der Dichtvorsprung 44 von dem Dichtsitz 50 beabstandet ist. Wird, wie vorstehend beschrieben, bei freiem Ansaugen in dem Steuerraum 30 ein Unterdruck aufgebaut, so wird auf die bistabile Membran 28 (flexible Trennwandung) eine Kraft in Richtung einer Verkleinerung des Volumens des Steuerraums 30 ausgeübt. Dadurch schnappt die bistabile Membran 28 in eine zweite Konfiguration, die beispielhaft in Figur 4 dargestellt ist. In der zweiten Konfiguration liegt der Dichtvorsprung 44 an dem Dichtsitz 50 an.

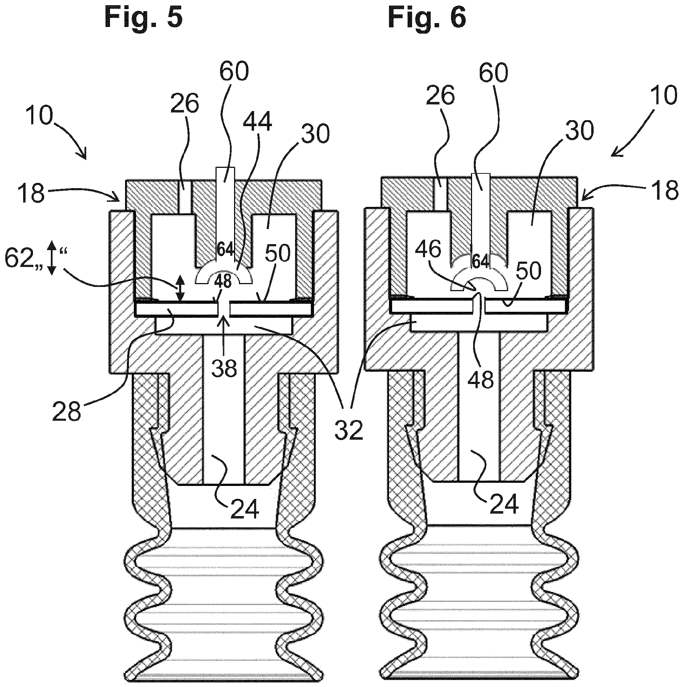

Wie in den Figuren 5 und 6 gezeigt, kann der Dichtvorsprung 44 auch ventilgehäuseseitig angeordnet sein und in den Steuerraum 30 hervorragen. Der Dichtsitz 50 wird dann beispielsweise von einer dem Steuerraum 30 zugewandten Oberfläche der flexiblen Trennwandung 28 gebildet (Figuren 5 und 6). Wölbt sich die flexible Trennwandung 28 aufgrund eines Unterdrucks im Steuerraum 30 gegenüber der Saugseite 21 nach oben, so liegt der Dichtsitz an dem Dichtvorsprung 44 an. Insbesondere überdeckt die Mulde 46 des Dichtvorsprungs 44 die Mündungsöffnung 48 des Drosseldurchgangs 38 durch die flexible Trennwandung 28.

Der Dichtvorsprung 44 ist vorzugsweise mittels eines verstellbaren Halteelements 60 an dem Ventilgehäuse 18 angeordnet. Das Halteelement 60 ist verstellbar insofern, als der Dichtvorsprung 44 durch Verstellen des Halteelements in Richtung zu dem Dichtsitz 40 vorgeschoben werden kann. Auch ein zurückziehen ist möglich. Dadurch ist ein Abstand 62 einstellbar, welchen der Dichtvorsprung 44 bei Vorliegen der Freigabekonfiguration (Figur 5) von dem Dichtsitz 50 aufweist. Die Figur 6 veranschaulicht einen Zustand, in welchem der Dichtvorsprung 44 durch Verstellen des Halteelements 60 näher an den Dichtsitz 50 eingestellt ist und dadurch der Abstand 62 verringert ist. In dieser Konfiguration wird das Ventil in Abhängigkeit eines sich im Steuerraum 30 einstellenden Unterdrucks empfindlicher ansprechen.

Zur weiteren Ausgestaltung ist ein verstellbarer Verdrängungskörper 64 vorgesehen, der in einem definierten Maß in den Steuerraum 30 verlagerbar ist. Dadurch ist das effektive Volumen des Steuerraums 30 einstellbar. Im Beispiel der Figur 5 wird der Verdrängungskörper 64 von dem Halteelement 60 für den Dichtvorsprung 44 gebildet, ohne dass ein separates Bauteil erforderlich ist. Wenn der Verdrängungskörper 64 in den Steuerraum 30 eingeschoben wird und dadurch das effektive Volumen verringert wird, so spricht die Ventilvorrichtung 10 empfindlicher auf eine Strömung bei freiem Ansaugen ein, da sich in dem Steuerraum 30 schneller ein relevanter Unterdruck aufbaut. Dadurch gelangt die Ventilvorrichtung 10 schneller in die Schließkonfiguration.

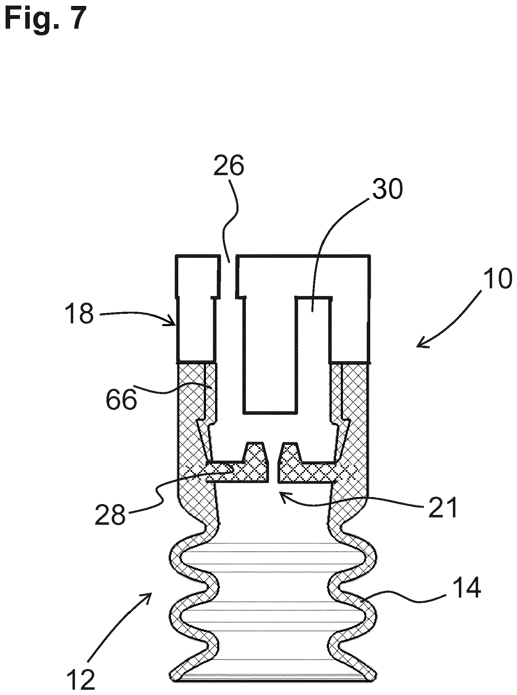

Die flexible Trennwandung 28 kann auch in dem Saugkörper 14 angeordnet sein. Insofern kann die flexible Trennwandung 28 auch außerhalb des eigentlichen (festen) Ventilgehäuses 18 vorgesehen sein. Wie in Figur 7 dargestellt, kann z.B. ein flexibel ausgebildeter Saugkörper 14 an dem Ventilgehäuse 18 angeordnet sein, wobei sich die flexible Trennwandung 28 durch einen Innenraum des Saugkörpers 14 erstreckt.

Vorzugsweise ist die flexible Trennwandung 28 unmittelbar anliegend oder benachbart an in einem Öffnungsabschnitt 66 des Ventilgehäuses 18 angeordnet. Der Ventilinnenraum 20 kann dann insbesondere den Steuerraum 30 bilden. Die Saugseite 21 wird von dem einen den Öffnungsabschnitt 66 des Ventilgehäuses 18 anschließenden Bereich innerhalb des Saugkörpers 14 gebildet.

## Patentansprüche

1. Saugvorrichtung (12) zum Fixieren von Gegenständen durch Ansaugen mittels Unterdruck, mit einer Ventilvorrichtung (10) umfassend:
- ein Ventilgehäuse (18), welches einen Ventilinnenraum (20) einschließt und welches einen Versorgungsanschluss (26) zur Verbindung mit einer Unterdruckversorgung und eine Saugseite (21) aufweist,
- eine flexible Trennwandung (28), welche derart verläuft, dass sich einerseits der flexiblen Trennwandung (28) ein Steuerraum (30) in dem Ventilgehäuse (18) erstreckt, und dass andererseits der flexiblen Trennwandung (28) die Saugseite (21) liegt,
wobei der Steuerraum (30) mit dem Versorgungsanschluss (26) verbunden ist und der Steuerraum (30) über einen Drosseldurchgang (38) mit der Saugseite (21) verbunden ist, derart, dass bei freiem Ansaugen bei frei einströmbarem Zustand der Saugseite (21) ein Strömungsweg (40) von der Saugseite (21) durch den Drosseldurchgang (38) in den Steuerraum (30) hinein und weiter von dem Steuerraum (30) durch den Versorgungsanschluss (26) bereitgestellt wird,
und wobei der Drosseldurchgang (38) derart ausgebildet ist, dass ein Strömungswiderstand für Strömungen entlang des Strömungswegs (40) durch den Drosseldurchgang (38) derart definiert ist, dass sich bei freiem Ansaugen bei frei einströmbaren Zustand der Saugseite (21) aufgrund des Strömungswiderstandes in dem Steuerraum (30) ein Unterdruck gegenüber der Saugseite einstellt,
und wobei die flexible Trennwandung (28) derart ausgebildet ist, dass sie aufgrund des sich bei freiem Ansaugen in dem Steuerraum (30) einstellenden Unterdrucks verformbar ist, wobei ein in das Innere des Steuerraums (30) hineinragender Dichtvorsprung (44) und ein zugehöriger Dichtsitz (50) innerhalb des Steuerraumes (30) vorgesehen sind, wobei Dichtvorsprung (44) und Dichtsitz (50) derart angeordnet sind, dass bei Verformung der flexiblen Trennwandung (28) bei freiem Ansaugen der Dichtvorsprung (44) an den Dichtsitz (50) zum Anliegen kommt, und wobei Dichtvorsprung (44) und Dichtsitz (50) derart ausgebildet sind, dass bei Anliegen des Dichtvorsprungs (44) am Dichtsitz (50) der Strömungsweg (40) durch den Drosseldurchgang (38) in den Steuerraum (30) innerhalb des Steuerraumes (30) unterbrochen ist, wobei der Drosseldurchgang (38) als Kanal ausgebildet ist, der sich durch die flexible Trennwandung erstreckt und mit einer Mündungsöffnung (48) in den Steuerraum (30) einmündet, **dadurch gekennzeichnet, dass** Dichtvorsprung (44) und Dichtsitz (50) derart angeordnet sind, dass bei Anliegen des Dichtvorsprungs (44) an dem Dichtsitz (50) die Mündungsöffnung (48) innerhalb des Steuerraums (30) geschlossen ist.

2. Saugvorrichtung (12) nach Anspruch 1, wobei die flexible Trennwandung (28) sich derart innerhalb des Ventilgehäuses erstreckt, dass sich einerseits der flexiblen Trennwandung (28) der Steuerraum (30) erstreckt und sich andererseits der flexiblen Trennwandung (28) ein Saugseitenraum (32) erstreckt, wobei der Saugseitenraum (32) durch den Drosseldurchgang (38) mit dem Steuerraum (30) verbunden ist.

3. Saugvorrichtung (12) nach Anspruch 1, wobei ein Saugkörper (14) zum Anlegen an einen anzusaugenden Gegenstand vorgesehen ist, wobei der Saugkörper (14) an dem Ventilgehäuse (18) angeordnet ist, und wobei die flexible Trennwandung (28) in dem Saugkörper (14) verläuft.

4. Saugvorrichtung (12) nach einem der vorherigen Ansprüche, wobei der Dichtvorsprung (44) eine in den Steuerraum (30) offene Mulde (46) aufweist, welche insbesondere trichterartig ausgebildet ist.

5. Saugvorrichtung (12) nach Anspruch 4, wobei der Drosseldurchgang (38) in der Mulde (46) mündet.

6. Saugvorrichtung (12) nach einem der vorherigen Ansprüche, wobei der Kanal durch die flexible Trennwandung (28) an einer dem Steuerraum (30) zugewandten Oberfläche der flexiblen Trennwandung (28) in der Mündungsöffnung (48) mündet.

7. Saugvorrichtung (12) nach Anspruch 6, wobei der Dichtvorsprung (44) von einem die Mündungsöffnung (48) umgebenden Wulst (58) gebildet ist.

8. Saugvorrichtung (12) nach wenigstens Anspruch 6, wobei die flexible Trennwandung (28) Befestigungsbereiche (54, 56) aufweist und die Mündungsöffnung (48) zentrisch zwischen den Befestigungsbereichen (54, 56) angeordnet ist.

9. Saugvorrichtung (12) nach einem der vorherigen Ansprüche, wobei die flexible Trennwandung (28) derart ausgebildet und angeordnet ist, dass sie bistabil in eine erste Konfiguration und in eine zweite Konfiguration schnappen kann, wobei in der ersten Konfiguration der Dichtvorsprung (44) an dem Dichtsitz (50) anliegt und in der zweiten Konfiguration der Dichtvorsprung (44) von dem Dichtsitz (50) beabstandet ist.

10. Saugvorrichtung (12) nach einem der vorherigen Ansprüche, wobei ein verstellbarer Verdrängungskörper (64) vorgesehen ist, welcher in dem Ventilinnenraum (20) derart verlagerbar ist, dass das Volumen des Steuerraums (30) einstellbar ist.

11. Saugvorrichtung (12) nach einem der vorherigen Ansprüche, **dadurch gekennzeichnet, dass** der Dichtsitz (50) als ein in den Steuerraum (30) vorspringender Abschnitt (52) des Ventilgehäuses (18) ausgebildet ist.

12. Saugvorrichtung (12) nach einem der vorherigen Ansprüche, wobei der Dichtvorsprung (44) an der flexiblen Trennwandung (28) angeordnet ist, insbesondere einstückig mit der flexiblen Trennwandung (28) ausgebildet ist

13. Saugvorrichtung (12) nach wenigstens einem der Ansprüche 1 oder 2, wobei der Dichtvorsprung (44) an dem Ventilgehäuse (18) angeordnet ist und in den Steuerraum (30) hervorragt, und wobei der Dichtsitz (50) an der flexiblen Trennwandung (28) angeordnet ist.

14. Saugvorrichtung (12) nach Anspruch 13, wobei der Dichtvorsprung (44) mittels eines verstellbaren Halteelements (60) an dem Ventilgehäuse (18) derart angeordnet ist, dass ein Abstand (62) des Dichtvorsprungs (44) zu dem Dichtsitz (50) einstellbar ist.

15. Saugvorrichtung (12) nach einem der vorherigen Ansprüche, wobei die flexible Trennwandung (28) derart ausgebildet und derart gespannt angeordnet ist, dass der Dichtvorsprung (44) und der Dichtsitz (50) in einer voneinander beabstandeten Lage vorgespannt sind.

## Claims

1. Suction device (12) for fixing objects by suction by means of negative pressure, having a valve device (10) comprising:
- a valve housing (18), which includes a valve interior (20) and has a supply connection (26) for connection to a negative pressure supply and a suction side (21),
- a flexible partition (28) which extends in such a way that a control chamber (30) extends into the valve housing (18) on one side of the flexible partition (28) and in that the suction side (21) lies on the other side of the flexible partition (28),
the control chamber (30) being connected to the supply connection (26) and the control chamber (30) being connected to the suction side (21) via a throttle passage (38) in such a way that, during free suction, when the suction side (21) is in a free inflow state, a flow path (40) is provided from the suction side (21) through the throttle passage (38) into the control chamber (30) and continues from the control chamber (30) through the supply connection (26),
and the throttle passage (38) being designed in such a way that a flow resistance for flows along the flow path (40) through the throttle passage (38) is defined in such a way that, during free suction, when the suction side (21) is in a free inflow state, a negative pressure with respect to the suction side occurs in the control chamber (30) due to the flow resistance,
and the flexible partition (28) being designed in such a way that it is deformable due to the negative pressure which occurs in the control chamber (30) during free suction, a sealing projection (44) protruding into the interior of the control chamber (30) and an associated sealing seat (50) being provided inside the control chamber (30), the sealing projection (44) and the sealing seat (50) being arranged in such a way that, when the flexible partition (28) is deformed during free suction, the sealing projection (44) comes to rest against the sealing seat (50), and the sealing projection (44) and the sealing seat (50) being designed in such a way that, when the sealing projection (44) rests against the sealing seat (50), the flow path (40) through the throttle passage (38) into the control chamber (30) is interrupted inside the control chamber (30), the throttle passage (38) being designed as a channel which extends through the flexible partition and opens into the control chamber (30) via a mouth opening (48), **characterized in that** the sealing projection (44) and the sealing seat (50) are arranged in such a way that when the sealing projection (44) rests against the sealing seat (50), the mouth opening (48) is closed inside the control chamber (30).

2. Suction device (12) according to claim 1, wherein the flexible partition (28) extends inside the valve housing in such a way that the control chamber (3) extends on one side of the flexible partition (28) and a suction-side chamber (32) extends on the other side of the flexible partition (28), wherein the suction-side chamber (32) is connected to the control chamber (30) via the throttle passage (38).

3. Suction device (12) according to claim 1, wherein a suction body (14) for applying an object to be suctioned is provided, wherein the suction body (14) is arranged on the valve housing (18), and wherein the flexible partition (28) extends into the suction body (14) .

4. Suction device (12) according to any of the preceding claims, wherein the sealing projection (44) has a recess (46) which opens into the control chamber (30) and is in particular funnel-shaped.

5. Suction device (12) according to claim 4, wherein the throttle passage (38) opens into the recess (46).

6. Suction device (12) according to any of the preceding claims, wherein the channel through the flexible partition (28) opens into the mouth opening (48) at a surface of the flexible partition (28), which surface faces the control chamber (30).

7. Suction device (12) according to claim 6, wherein the sealing projection (44) is formed by a bead (58) which surrounds the mouth opening (48).

8. Suction device (12) according to at least claim 6,
wherein the flexible partition (28) has fastening regions (54, 56) and the mouth opening (48) is arranged centrally between the fastening regions (54, 56).

9. Suction device (12) according to any of the preceding claims, wherein the flexible partition (28) is designed and arranged in such a way that it can snap bistably into a first configuration and into a second configuration, wherein in the first configuration the sealing projection (44) rests against the sealing seat (50) and in the second configuration the sealing projection (44) is spaced apart from the sealing seat (50) .

10. Suction device (12) according to any of the preceding claims, wherein an adjustable displacement body (64) is provided, which can be displaced in the valve interior (20) in such a way that the volume of the control chamber (30) can be adjusted.

11. Suction device (12) according to any of the preceding claims, **characterized in that** the sealing seat (50) is designed as a portion (52) of the valve housing (18), which portion projects into the control chamber (30).

12. Suction device (12) according to any of the preceding claims, wherein the sealing projection (44) is arranged on the flexible partition (28), in particular is integral with the flexible partition (28).

13. Suction device (12) according to at least one of claims 1 or 2, wherein the sealing projection (44) is arranged on the valve housing (18) and protrudes into the control chamber (30), and wherein the sealing seat (50) is arranged on the flexible partition (28).

14. Suction device (12) according to claim 13, wherein the sealing projection (44) is arranged on the valve housing (18) by means of an adjustable retaining element (60) in such a way that a distance (62) of the sealing projection (44) from the sealing seat (50) can be adjusted.

15. Suction device (12) according to any of the preceding claims, wherein the flexible partition (28) is designed and tensioned in such a way that the sealing projection (44) and the sealing seat (50) are pretensioned in a mutually spaced position.

## Revendications

1. Dispositif d'aspiration (12) pour la fixation d'objets par aspiration au moyen de dépression, avec un dispositif de soupape (10) comprenant:
- un boîtier de soupape (18) qui renferme un intérieur de soupape (20) et qui présente un raccord d'alimentation (26) pour le raccordement à une alimentation en dépression et un côté aspiration (21),
- une cloison souple (28) qui s'étend de telle sorte que d'un côté de la cloison souple (28) s'étend une chambre de commande (30) dans le boîtier de soupape (18) et que de l'autre côté de la cloison souple (28) est situé le côté aspiration (21),
dans lequel la chambre de commande (30) est reliée au raccord d'alimentation (26) et la chambre de commande (30) est reliée au côté aspiration (21) via un passage d'étranglement (38) de telle sorte que, lorsque l'aspiration est libre et que le côté aspiration (21) est à l'état de libre écoulement, un trajet d'écoulement (40) menant du côté aspiration (21) à travers le passage d'étranglement (38) dans la chambre de commande (30) et, de plus, de la chambre de commande (30) à travers le raccord d'alimentation (26) est fourni,
et dans lequel le passage d'étranglement (38) est conçu de telle sorte qu'une résistance à l'écoulement pour des écoulements le long du trajet d'écoulement (40) à travers le passage d'étranglement (38) est définie de telle manière que, lorsque l'aspiration est libre et que le côté aspiration (21) est à l'état de libre écoulement, une dépression est établie dans la chambre de commande (30) par rapport au côté aspiration, en raison de la résistance à l'écoulement,
et dans lequel la cloison souple (28) est conçue de telle sorte qu'elle peut être déformée en raison de la dépression qui se produit dans la chambre de commande (30) lorsque l'aspiration est libre, dans lequel une saillie d'étanchéité (44) faisant saillie dans l'intérieur de la chambre de commande (30) et un siège d'étanchéité (50) associé sont prévus à l'intérieur de la chambre de commande (30), dans lequel la saillie d'étanchéité (44) et le siège d'étanchéité (50) sont agencés de telle sorte que, lorsque la cloison souple (28) est déformée dans le cas d'une aspiration libre, la saillie d'étanchéité (44) vient en appui sur le siège d'étanchéité (50), et dans lequel la saillie d'étanchéité (44) et le siège d'étanchéité (50) sont conçus de telle manière que, lorsque la saillie d'étanchéité (44) est en appui sur le siège d'étanchéité (50), le trajet d'écoulement (40) menant à travers le passage d'étranglement (38) dans la chambre de commande (30) est interrompu à l'intérieur de la chambre de commande (30), dans lequel le passage d'étranglement (38) est conçu en tant que canal qui s'étend à travers la cloison souple et débouche par un orifice d'embouchure (48) dans la chambre de commande (30), **caractérisé par le fait que** la saillie d'étanchéité (44) et le siège d'étanchéité (50) sont disposés de telle manière que, lorsque la saillie d'étanchéité (44) est en appui sur le siège d'étanchéité (50), l'orifice d'embouchure (48) à l'intérieur de la chambre de commande (30) est fermé.

2. Dispositif d'aspiration (12) selon la revendication 1, dans lequel la cloison souple (28) s'étend à l'intérieur du boîtier de soupape de telle manière que d'un côté de la cloison souple (28) s'étend la chambre de commande (30) et que de l'autre côté de la cloison souple (28) s'étend une chambre de côté aspiration (32), dans lequel ladite chambre de côté aspiration (32) est reliée à la chambre de commande (30) par le passage d'étranglement (38).

3. Dispositif d'aspiration (12) selon la revendication 1, dans lequel un corps d'aspiration (14) destiné à être appliqué à un objet à aspirer est prévu, dans lequel ledit corps d'aspiration (14) est agencé sur le boîtier de soupape (18), et dans lequel la cloison souple (28) s'étend dans le corps d'aspiration (14).

4. Dispositif d'aspiration (12) selon l'une quelconque des revendications précédentes, dans lequel la saillie d'étanchéité (44) présente un creux (46) qui est ouvert dans la chambre de commande (30) et qui, en particulier, est conçu de type entonnoir.

5. Dispositif d'aspiration (12) selon la revendication 4, dans lequel le passage d'étranglement (38) débouche dans le creux (46).

6. Dispositif d'aspiration (12) selon l'une quelconque des revendications précédentes, dans lequel le canal débouche dans l'orifice d'embouchure (48) à travers la cloison souple (28) sur une surface de la cloison souple (28), qui montre vers la chambre de commande (30) .

7. Dispositif d'aspiration (12) selon la revendication 6, dans lequel la saillie d'étanchéité (44) est formée par un bourrelet (58) entourant l'orifice d'embouchure (48) .

8. Dispositif d'aspiration (12) selon au moins la revendication 6, dans lequel la cloison souple (28) présente des zones de fixation (54, 56) et l'orifice d'embouchure (48) est disposée de manière centrale entre les zones de fixation (54, 56).

9. Dispositif d'aspiration (12) selon l'une quelconque des revendications précédentes, dans lequel la cloison souple (28) est conçue et agencée de manière à ce qu'elle puisse s'enclencher bistablement dans une première configuration et dans une deuxième configuration, dans lequel, dans la première configuration, la saillie d'étanchéité (44) est en appui sur le siège d'étanchéité (50) et, dans la deuxième configuration, la saillie d'étanchéité (44) est espacée du siège d'étanchéité (50).

10. Dispositif d'aspiration (12) selon l'une quelconque des revendications précédentes, dans lequel un corps de déplacement (64) réglable est prévu, qui peut être déplacé dans l'intérieur de soupape (20) de telle sorte que le volume de la chambre de commande (30) est réglable.

11. Dispositif d'aspiration (12) selon l'une quelconque des revendications précédentes, **caractérisé par le fait que** le siège d'étanchéité (50) est réalisé en tant que portion (52) du boîtier de soupape (18), qui fait saillie dans la chambre de commande (30).

12. Dispositif d'aspiration (12) selon l'une quelconque des revendications précédentes, dans lequel la saillie d'étanchéité (44) est agencée sur la cloison souple (28), en particulier est réalisée d'un seul tenant avec la cloison souple (28).

13. Dispositif d'aspiration (12) selon au moins l'une des revendications 1 ou 2, dans lequel la saillie d'étanchéité (44) est agencée sur le boîtier de soupape (18) et fait saillie dans la chambre de commande (30), et dans lequel le siège d'étanchéité (50) est agencé sur la cloison souple (28).

14. Dispositif d'aspiration (12) selon la revendication 13, dans lequel la saillie d'étanchéité (44) est agencée sur le boîtier de soupape (18) au moyen d'un élément de retenue (60) réglable, de telle sorte qu'une distance (62) séparant la saillie d'étanchéité (44) du siège d'étanchéité (50) est réglable.

15. Dispositif d'aspiration (12) selon l'une quelconque des revendications précédentes, dans lequel la cloison souple (28) est conçue de telle sorte et est agencée de manière tendue de telle sorte que la saillie d'étanchéité (44) et le siège d'étanchéité (50) sont précontraints dans une position où ils sont espacés l'un de l'autre.
